# EUROPÄISCHE PATENTANMELDUNG

(11) **EP 4 491 019 A1**
(43) Veröffentlichungstag der Anmeldung: **15.01.2025**
(21) Anmeldenummer: 24184882.9
(22) Anmeldetag: 27.06.2024
(51) Int. Cl.: A01M 29/30, A01G 13/10

(54) **VORRICHTUNG ZUR UNGEZIEFERABWEHR**

(30) Priorität: 29.06.2023 DE 202023103639 U; 15.09.2023 DE 202023105389 U
(71) Anmelder: Preußner, Matthias, 61169 Friedberg (DE)
(72) Erfinder: Preußner, Matthias, 61169 Friedberg (DE)
(74) Vertreter: Haarpatent Patentanwälte Krämer Meyer

(57) **Zusammenfassung**

Bei einer Vorrichtung (1) zur Abwehr von Schadnagern sind mehrere plattenförmige Wände (2) vorgesehen, die jeweils eine im Wesentlichen rechteckige Grundfläche (7) mit zwei Schmalseiten (3, 4) und zwei Längsseiten (5, 6) aufweisen. Des Weiteren sind Verbindungsmittel (8) zur Verbindung der Wände (2) miteinander vorgesehen, wobei die Wände (2) mit jeweils einer ihrer Längsseiten (5, 6) auf einem Boden aufstellbar sind und wobei jede Wand (2) an einer Längsseite (5, 6) einen Rand (10) aufweist, der in einem Winkel α oder einem Bogen von der Grundfläche (7) absteht.

## Beschreibung

Die Erfindung betrifft eine Vorrichtung mit mehreren plattenförmigen Wänden, die über ihre Schmalseiten miteinander verbindbar sind und an einer ihrer Längsseite einen für Schadnager im Grunde unüberwindbaren Rand aufweisen.

Fahrzeuge, für die eine saisonale Benutzung vorgesehen ist, werden in der unbenutzten Zeit häufig eingelagert. Als Beispiel hierfür seien landwirtschaftliche Fahrzeuge genannt, wie z. B. Erntemaschinen, Mähdrescher oder dergleichen. Der Mähdrescher wird häufig über die Wintermonate in einem Gebäude, wie z. B. einer Halle eingelagert. Es zeigt sich, dass der Mähdrescher in dieser Zeit von Ungeziefer befallen wird. Mäuse klettern über die Reifen in das Fahrzeug und können nicht nur Bestandteile des Innenraums beschädigen, sondern auch Kabel oder sonstige elektrische Bauteile anknabbern, was langfristig zum Ausfall des Fahrzeuges führen kann. Besonders problematisch hierbei ist, dass gerade die Schäden an Kabeln oder elektrischen Bauteilen bei der Reaktivierung des Fahrzeuges unentdeckt bleiben, bis es zu einem elektronischen Ausfall kommt. Das Fahrzeug muss zu hohen Kosten repariert werden und fällt als Nutzfahrzeug aus, was wiederum weitere finanzielle Folgen nach sich ziehen kann.

Ähnlich verhält es sich mit sonstigen, über einen längeren Zeitraum geparkten Fahrzeugen, wie beispielsweise, aber nicht abschließend Wohnmobile, Wohnwagen, Baumaschinen oder Boote.

Ein Befall mit Schadnagern, wie z. B. Mäusen tritt auch in Räumen auf, in denen beispielsweise Futter gelagert wird. Es ist nur schwer zu verhindern, dass die Schadnager an z. B. Regale gelangen. Auch gelagerte Utensilien, wie Bücher, Stoffe, Lebensmittel, usw., können das Ziel von Schadnagern sein.

Der Erfindung liegt die Aufgabe zugrunde, ein Hindernis bereitzustellen, das von Schadnagern nicht überwunden werden kann.

Gelöst wird die Aufgabe durch die Merkmale des Anspruchs 1. Bevorzugte Ausgestaltungen sind in den abhängigen Ansprüchen beschrieben.

Die Aufgabe wird erfindungsgemäß dadurch gelöst, dass eine Vorrichtung zur Abwehr von Schadnagern bereitgestellt wird, mit mehreren plattenförmigen Wänden, die jeweils eine im Wesentlichen rechteckige Grundfläche mit zwei Schmalseiten und zwei Längsseiten aufweisen, mit Verbindungsmitteln zur Verbindung der Wände miteinander, wobei die Wände mit jeweils einer ihrer Längsseiten auf einem Boden aufstellbar sind und wobei jede Wand an einer Längsseite einen Rand aufweist, der in einem Winkel α oder einem Bogen von der Grundfläche absteht, so dass Schadnager nicht über die Wände gelangen können. Im Sinne der Erfindung umfassen Schadnager insbesondere Mäuse und Ratten, wobei die Erfindung auch gegen weitere Nagetiere Schutz bietet. Aufgrund der Gestaltung der Wände können Schadnager nicht hinüberklettern- oder -springen. Die Wände bilden somit eine für Schadnager unüberwindbare Hürde.

Insbesondere ist zumindest jeweils ein freies Ende einer Längsseite einer Wand nach außen gebogen, so dass sie jeweils einen Rand in Gestalt eines halbkragenförmigen Überhangs bildet. Die freien Enden der Längsseiten, die den überhangförmigen Rand formen, ragen vorteilhafterweise in Richtung der gegenüberliegenden auf einem Boden aufstellbaren Längsseite.

Insbesondere betrifft die Erfindung eine Vorrichtung, insbesondere die Verwendung der Vorrichtung mit mehreren plattenförmigen Wänden zur Abwehr von Schadnagern, die jeweils eine im Wesentlichen rechteckige Grundform mit zwei Schmalseiten und zwei Längsseiten aufweisen, mit an den Wänden vorliegenden oder an diesen reversibel befestigbaren Stützmitteln und mit nahe den Schmalseiten angeordneten Verbindungsmitteln zur reversiblen Verbindung der Wände miteinander, so dass mithilfe der Wände eine offene oder geschlossene Kette bildbar ist, die beispielsweise einen oder mehrere Gegenstände umschließen kann, wobei die verbindbaren Wände mit einer ihrer Längsseiten auf einem Boden aufstellbar sind und wobei jede Wand an einer Längsseite einen Rand aufweist, der in einem Winkel α oder einem Bogen von der Grundfläche absteht. In dieser bevorzugten Verwendung kann mithilfe der Wände eine für Schadnager unüberwindbare Barriere gebildet werden, die z. B. als Schutz in einem Durchgang verwendet wird oder einen Reifen eines Fahrzeuges umschließt.

In einer Ausgestaltung kann die Kette in sich geschlossen gestaltet sein und einen oder mehrere Gegenstände umschließen, so dass Schadnager nicht an den Gegenstand oder die Gegenstände gelangen. Bei einem Reifen kann es sich im Sinne der Erfindung um einen Reifen eines Kraftfahrzeuges, eines Anhängers oder dergleichen handeln. Beispielhaft hierfür sollen Reifen von landwirtschaftlichen Fahrzeugen, Anhängern, Wohnmobilen, Wohnwagen, oder dergleichen genannt werden. Es kann von der Kette von Wänden aber auch ein komplettes Fahrzeug umschlossen werden.

In einer bevorzugten Ausgestaltung können die Wände aus Metall, Kunststoff, faserverstärktem Kunststoff oder einer Kombination hieraus bestehen. Es hat sich gezeigt, dass derartig hergestellte Wände eine lange Haltbarkeit und Stabilität aufweisen. Außerdem bieten sie keine Angriffsfläche für Schadnager. Es kann besonders bevorzugt sein, die Wände aus verzinktem Blech herzustellen.

In einer Ausgestaltung ist vorgesehen, dass jeweils eine Wand mit ihrem zugehörigen Rand und/oder einem Stützmittel oder mehreren Stützmitteln einteilig gestaltet ist. Ferner kann vorgesehen sein, dass jeweils eine Wand mit ihrem zugehörigen Rand einteilig gestaltet ist. Es kann jedoch auch bevorzugt sein, jeweils ein Rand an einer Längsseite einer Wand reversibel befestigbar ist. Die Wände können über die Verbindungsmittel leicht miteinander verbindbar sein, so dass die Vorrichtung bei Bedarf demontiert und leicht gelagert werden kann. Hierdurch kann eine leicht zu transportierende und zu lagernde Vorrichtung bereitgestellt werden.

Es ist bevorzugt, dass die Wände über ihre Schmalseiten miteinander verbunden werden können, so dass eine Kette von Wänden entsteht, die auch in sich schließbar ist, insofern das Ende der Kette mit dem Anfang verbunden wird. Um jedoch die Höhe der Wände zu verändern, kann es vorteilhaft sein, wenn die Längsseiten der Wände miteinander verbindbar sind. Hierdurch kann die Vorrichtung an den Bedarf leicht angepasst werden. An dem Rand oder den Längsseiten der Wände können beispielsweise Bohrungen vorgesehen sein, an die eine weitere Längsseite einer Wand mittels beispielsweise Schrauben befestigbar ist. Hierdurch kann durch einfache Maßnahmen die Höhe nach Belieben verändert werden.

Es kann vorgesehen sein, dass der umlaufende Rand mehrteilig gestaltet und an den Wänden befestigbar ist. Um eine einfache Lagerbarkeit bzw. Transportierbarkeit der Vorrichtung zu erreichen, kann der Rand mehrteilig gestaltet sein, so dass jeweils ein, einen Rand bildendes Randteil an einer Wand befestigbar ist. Beispielsweise könnte in einer Ausgestaltung ein länglicher und U-förmig gestalteter Rand vorgesehen sein, wobei einer seiner Längsseiten eine schienenförmige Ausnehmung umfasst, die zur Aufnahme des freien Endes der Längsseite einer Wand vorgesehen ist.

Der Rand kann unterschiedlich gestaltet sein. In einer Ausgestaltung verläuft der Rand zumindest bereichsweise in einem spitzen oder stumpfen Winkel α zur Grundfläche. Der Rand kann beispielsweise in einem ersten Bereich in einem Winkel α von im Wesentlichen 90° zur Grundfläche vorliegen, wobei sich der Rand dann in einem zweiten Bereich, der dem ersten Bereich folgt, in einem spitzen oder stumpfen Winkel zur Grundfläche insbesondere in Richtung der gegenüberliegenden Längsseite hinbewegt. Der Winkel α kann jedoch auch anders gestaltet sein. So kann der Winkel α auch mehr oder weniger als 90° relativ zur Grundfläche einer Wand betragen. In einer besonders bevorzugten Ausgestaltung verläuft der Rand erst über einen Bereich in einem Winkel α von 90° und knickt dann in Richtung der gegenüberliegenden Längsseite ab und erstreckt sich parallel zur Grundfläche der Wand, d. h. formt im Grunde ein rechteckiges Profil. Es kann jedoch auch vorteilhaft sein, wenn der Rand in einem Bogen, das heißt nicht in einem Winkel von der Grundfläche abgeht.

In einer weiteren Ausgestaltung ist der Rand halbkragenförmig gestaltet und formt insbesondere einen Überhang. Dieser halbkragenförmige Bereich verläuft im Grunde erst senkrecht oder gebogen zur Grundfläche und nähert sich ihr dann wieder an und verläuft im Wesentlichen parallel zur Grundfläche in Richtung der gegenüberliegenden Längsseite. Es kann jedoch auch vorteilhaft sein, wenn der halbkragenförmige Überhang bogenförmig gestaltet ist und dessen freies Ende in Richtung Grundfläche oder in die entgegengesetzte Richtung ragt. Der als Überhang, insbesondere halbkragenförmiger Überhang gestaltete Rand kann je nach Ausgestaltung als winkelförmiges Profil oder als Teilkreissegment ausgebildet sein. Auch eine geschwungene, beispielsweise S-förmige Gestaltung des Randes ist möglich. In einer Ausgestaltung ist der Rand als ein nach unten offenes Schienenprofil gestaltet.

Die Vorrichtung kann auch als wannenförmige Box gestaltet sein. Hierbei wird vorteilhafterweise der Boden durch ein Platte gebildet, an dem die Wände entweder reversibel befestigbar oder wenigstens einzelne Wände fest installiert sind, so dass ein wannenförmiger und nach oben offener zur Aufnahme eines Fahrzeugreifens ausgebildeter Raum gebildet ist, wobei mindestens eine Wand reversibel an dem plattenförmigen Boden, und wobei die Wände an ihrem dem Boden entgegengesetzten, insbesondere freiem Ende einen umlaufenden vom wannenförmigen Raum weg ragenden Rand aufweisen, so dass Schadnager nicht in den wannenförmigen Raum gelangen kann. Insbesondere sind die freien Längsseiten der Wände, insbesondere deren Oberkanten nach außen umgebogen oder verlaufen in einem Winkel α zur Grundfläche der Wände. Aufgrund der Gestaltung der Box können Schadnager nicht mehr in die wannenförmige Box gelangen, da die Schadnager nicht an den Wänden und dem umlaufenden Rand emporklettern oder an diesen emporspringen können. Es hat sich gezeigt, dass Boxen aus Blech eine lange Haltbarkeit und Stabilität aufweisen. Es kann besonders bevorzugt sein, die Box aus verzinktem Blech herzustellen. Die Box kann beispielsweise bis auf eine Wand einteilig gefertigt sein. Es kann jedoch auch bevorzugt sein, dass die Wände reversibel an dem plattenförmigen Boden befestigbar sind. Die Wände können beispielsweise durch ein Stecksystem miteinander verbindbar sein, so dass die Box bei Bedarf demontiert und leicht gelagert werden kann. Hierdurch kann eine leicht zu transportierende und zu lagernde Box bereitgestellt werden.

Bei dem Fahrzeugreifen kann es sich im Sinne der Erfindung um einen Reifen eines Kraftfahrzeuges, eines Anhängers oder dergleichen handeln. Beispielhaft hierfür sollen Reifen von landwirtschaftlichen Fahrzeugen, Anhängern, Wohnmobilen, Wohnwagen, oder dergleichen genannt werden.

Je nach Anwendung kann die Höhe der Wände verändert werden. Es kann vorgesehen sein, dass an dem umlaufenden Rand und/oder der Wand eine weitere Wand mit ihrer Längsseite befestigbar ist. An dem Rand oder Grundfläche einer Wand können beispielsweise Bohrungen vorgesehen sein, an die ein beispielsweise eine weitere Wand mit entsprechenden Bohrungen mittels beispielsweise Schrauben befestigt wird. Hierdurch kann durch einfache Maßnahmen die Höhe nach Belieben verändert werden. Die Verbindung mehrerer Wände kann auch über an den Längsseiten vorgesehen Flansche erfolgen.

Dem Fachmann sind große Reifen oder Kettenantriebe bekannt. Um derartige Fortbewegungsmittel in einer Wanne aufzunehmen, kann es bevorzugt sein, dass an zumindest einer Schmalseite des Bodens der wannenförmigen Box Befestigungsmittel vorliegen, sodass mehrere wannenförmige Boxen über ihre jeweiligen Schmalseiten miteinander verbindbar sind. Als Befestigungsmittel für die Boxen können auch Flansche Verwendung finden. Hierdurch können auch Reifen oder beispielsweise Kettenantriebe, die nicht in eine Wanne passen würden, geschützt werden, indem mehrere Wannen über die Schmalseiten der Box miteinander verbunden werden.

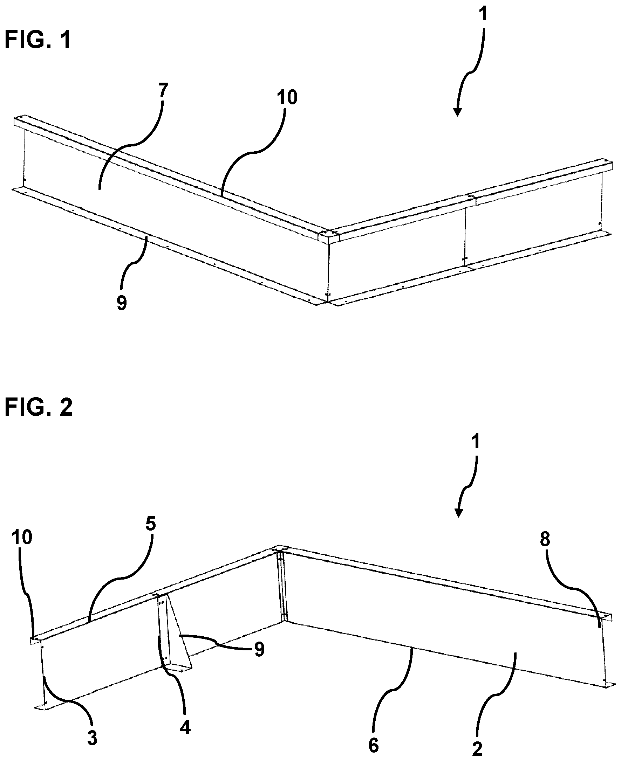

Die Erfindung wird nachfolgend anhand eines Ausführungsbeispiels der Erfindung näher erläutert, das in der Zeichnung dargestellt ist. Es zeigen
- Figur 1: eine erste perspektivische Ansicht einer Vorrichtung,
- Figur 2: eine weitere perspektivische Ansicht einer Vorrichtung.
- Figur 3: eine perspektivische Ansicht einer Ausgestaltung der Vorrichtung,
- Figur 4: eine perspektivische Ansicht der Ausgestaltung gemäß Figur 3 mit offener Seitenwand und
- Figur 5: eine perspektivische Ansicht der Ausgestaltung gemäß Figur 3 mit offener Seitenwand mit aufgenommenen Fahrzeugreifen.

Die Vorrichtung 1 umfasst mehrere Wände 2, die jeweils zwei Schmalseiten, nämlich eine erste und eine zweite Schmalseite 3, 4 und zwei Längsseiten, nämlich eine erste und zweite Längsseite 5, 6 aufweisen und eine rechteckige Grundfläche 7 begrenzen. Die Länge der Wände 2 kann unterschiedlich gestaltet sein.

Die Wände 2 können reversibel miteinander verbindbar sein. Hierzu können Verbindungsmittel 8 genutzt werden, die nahe der oder an der Schmalseite 3, 4 einer Wand 2 vorliegen können. Als Verbindungsmittel 8 können beispielsweise Stecksysteme, Rastverbindungen, Scharniere oder Schraubverbindungen dienen. In den Figuren sind beispielhaft Schraubverbindungen dargestellt, das heißt, die Schmalseiten 3, 4 der Wände 2 können in einer Ausgestaltung zumindest bereichsweise überlappen, sodass in den Wänden vorliegende Gewindelöcher zueinander koaxial anordbar und Schrauben einbringbar sind. Alternativ könnten die Schmalseiten 3, 4 der Wände 2 bündig aneinandergrenzen und mithilfe eines weiteren Bauteils, das über Bohrlöcher beider Wände 2 ragt und selbst Bohrlöcher aufweist, verbunden werden. Weiterhin könnte eine Wand 2 eine Öse mit einem Bohrloch aufweisen, die mit einem Bohrloch einer weiteren Wand 2 verschraubbar ist. Auch an den Schmalseiten 3, 4 vorliegende Flansche können zur Verbindung der Wände 2 benutzt werden.

Die Wände 2 können in einer Ausgestaltung mit einer ihrer Längsseite 5, 6 auf einer Fläche aufgestellt werden. Hierfür können an den Wänden 2 Stützmittel 9 vorgesehen sein, die beispielsweise reversibel mit den Wänden 2 verbindbar sind und das Stehen der Wände 2 unterstützen. In den Figuren sind beispielhaft zwei Gestaltungen von Stützmitteln 9 gezeigt. Zum einen ein, an der Längsseite 6 der Wände 2 vorliegender und umgebogener Endbereich, der in einem Winkel von circa 90° zur Grundfläche 7 steht und hierdurch ein Stützmittel 9 bildet. Das als gebogener Endbereich gestaltete Stützmittel 9 kann Bohrungen umfassen, über die das Stützmittel 9 an z. B. einem Boden befestigbar ist. Ein Boden kann im Sinne der Erfindung ein Fußboden eines Raumes oder Gebäudes oder Erdboden sein. In einer weiteren Ausgestaltung wird ein Boden durch eine Platte, insbesondere eine Metallplatte gebildet. Der Halt bzw. Stand der Wände 2 kann durch eine Befestigung an einem Boden nochmals verbessert werden. Zum anderen oder zusätzlich kann ein winkelförmiges Stützelement 9 vorgesehen sein, das beispielsweise an den Verbindungsmitteln 8 befestigbar ist. Das winkelförmige Stützelement 9 besitzt eine dreieckige Grundform, die sich von der einen Längsseite 6 zur anderen Längsseite 5 hin verjüngt, wobei die breite Seite der dreieckigen Grundform einen zur Grundfläche 7 senkrecht stehenden Stützboden aufweist und so auf einer Fläche abstellbar ist. Die verschieden ausgestalteten Stützelemente 9 können sich ergänzen, so dass die Vorrichtung 1 auch in unterschiedlichen Anordnungen der Wände 2 stabil steht. Die Kombination der Wände 2 ermöglicht die Bildung von Ketten, die in sich geschlossen oder offen verlaufen. Durch die Stützelemente 9 können die Wände 2 freistehen und einen Bereich oder einen Gegenstand vor dem Eindringen von Schadnagern schützen.

An einer Längsseite 5, und zwar der, die der bodennahen Längsseite 6 gegenübersteht, ist ein Rand 10 angeordnet. Der Rand 10 kann unterschiedlich gestaltet sein, ist aber vorzugsweise umlaufend gestaltet, d. h. erstreckt sich über die vollständige Länge der Längsseiten 5 der miteinander verbundenen Wände 2. Um ein Überwinden der Wand 2 durch Schadnager zu verhindern, steht der Rand 10 in einem Winkel α oder einem Bogen von der Grundfläche 7 ab. Das heißt, der Rand 10 erstreckt sich weg von der Grundfläche 7. In den gezeigten Ausgestaltungen steht der Rand 10, genauer sein erster Bereich in einem Winkel α von circa 90° zur Grundfläche 7. Sein, dem ersten Bereich folgender zweiter Bereich steht mit seinem freien Ende zu dem ersten Beriech in einem Winkel von circa 90°, verläuft im Wesentlichen parallel zur Grundfläche und erstreckt sich in Richtung der entgegengesetzten Längsseite 6. Hierdurch bildet der Rand 10 im Grunde einen halbkragenförmigen Überhang, der beispielsweise als ein nach unten offenes Schienenprofil gestaltet sein kann. Weitere Gestaltungen des Randes 10 sind möglich. Beispielsweise kann der Rand 10 bogenförmig anstatt in einem Winkel α zur Grundfläche 7 verlaufen. Des Weiteren kann der Winkel α spitz zulaufen, so dass im Grunde ein keilförmiger Hohlraum zwischen Rand 10 und Grundfläche 7 gebildet wird.

Der Rand 10 kann durch dem Fachmann bekannte Umformungsprozesse gebildet sein und einteilig mit der jeweiligen Wand 2 vorliegen. Es kann jedoch auch vorgesehen sein, dass der Rand 10 als separates Bauteil existiert, das reversibel an einer jeweiligen Wand 2 anbringbar ist. Hierfür können reversible oder irreversible Verbindungen genutzt werden. Beispielsweise kann der jeweilige Rand 10 einer Wand 2 an der Längsseite 5, 6 einer Wand 2 angeschweißt oder festgeschraubt werden. Auch kann ein Rand 10 und eine Wand 2 über ein Stecksystem miteinander verbindbar sein, indem beispielsweise das freie Ende der Längsseite 5, 6 oder des Randes 10 eine schienenförmige Öffnung umfasst, in die das jeweilige Ende des Verbindungspartners, also des Randes 10 oder der Längsseite 5, 6 hier hineingesteckt und bei Bedarf mit Befestigungsmitteln fixiert wird.

Die Verwendung der Vorrichtung 1, bzw. der Wände 2 gestaltet sich derart, dass die Wände 2 beispielsweise um ein Fahrzeug oder nur dessen einzelne Reifen errichtet werden. Hierfür werden mehrere Wände 2 miteinander verbunden, und zwar vorzugsweise über ihre Schmalseiten 3, 4, so dass eine Kette von Wänden 2 gebildet wird. Die Kette kann entweder offene Enden aufweisen, wenn die Kette von Wänden 2 z. B. als Schutzvorrichtung vor oder in einem Eingang oder Zugang positioniert wird. Alternativ kann die Kette von Wänden 2 in sich geschlossen sein, d. h. die Wände 2 bilden im Grunde ein geschlossenes Vieleck. Es kann beispielsweise ein Reifen oder mehrere Reifen eines Fahrzeuges von der Kette von Wänden 2 umrundet werden, so dass ein Schadnager nicht mehr an den Reifen und somit nicht mehr über den Reifen in das Fahrzeug gelangen kann. Um z. B: Kettenfahrzeuge zu schützen, kann eine Kette von Wänden 2 um das gesamte Fahrzeug errichtet werden.

Aufgrund der Flexibilität der Vorrichtung 1 können verschiedene Fahrzeuge, wie Landfahrzeuge, Wohnwagen, Wohnmobile, Motorräder, Autos, usw., vor dem Eindringen von Schadnagern geschützt werden. Gleichzeitig kann die Vorrichtung 1 auch zum Schutz von Räumen, Regalen oder dergleichen verwendet werden, da auch hier z. B. die Wände 2 um die Regale herum errichtet werden können und somit ein Erreichen der Regale verhindert wird. Wesentlicher Vorteil der Vorrichtung ist deren flexible Anpassung an die Größe der zu schützenden Gegenstände und folglich universelle Anwendbarkeit.

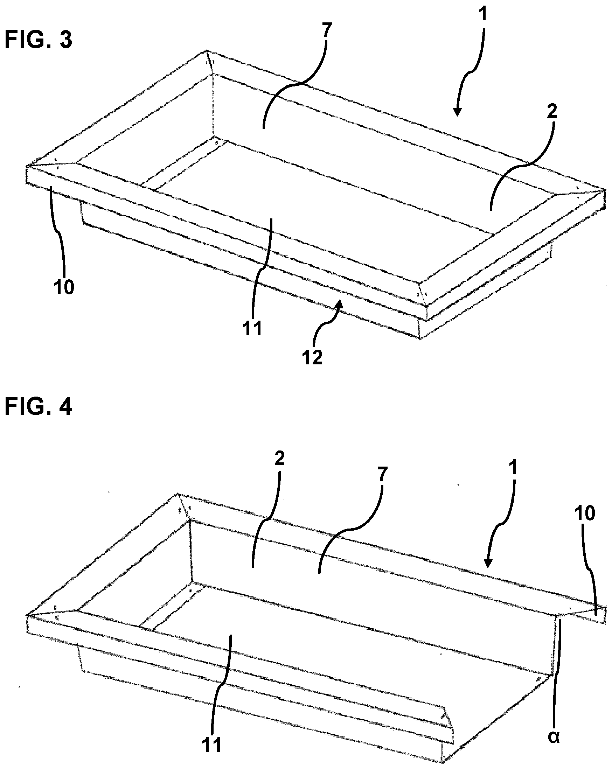

In den Figuren 3 bis 5 ist eine weitere Gestaltung der Erfindung gezeigt. Hierbei werden die Wände 2 an einem plattenförmigen Boden 11 reversibel oder irreversibel befestigt. Es kann auf oben beschriebene Befestigungsmittel zurückgegriffen werden. Durch die Befestigung der Wände 2 an dem Boden 11 ist eine wannenförmige Box 12 bildbar.

Die Box 12 umfasst den plattenförmigen Boden 11, von dem sich vier Wände 2 erstrecken, so dass ein wannenförmiger und nach oben offener Raum definiert wird. Die Box weist insbesondere eine rechteckige Grundform auf. Die Wände 2 können im Sinne der Erfindung auch als Seitenwände bezeichnet werden. Die Wände 2 stehen im Wesentlichen senkrecht zum plattenförmigen Boden 11, wobei auch sonstige Winkel, wie z. B. mehr oder weniger als 90° möglich sind. Die Wände 2 können reversibel oder irreversibel mit dem Boden 11 verbunden sein, wobei zumindest eine Wand 2 reversibel befestigt ist. In Figur 4 ist beispielhaft eine Wand 2 der wannenförmigen Box 12 entfernt, so dass eine Öffnung 6 oder ein Zugang zum wannenförmigen Raum gebildet ist. Es kann auch vorgesehen sein, dass weitere Wände 2 entfernbar sind, so dass eine Art Gasse oder Durchgang gebildet werden.

Zur reversiblen Befestigung der Wände 2 an dem Boden 11 können dem Fachmann bekannte Befestigungsmittel oder Techniken genutzt werden. Beispielsweise können Stecksysteme, Rastverbindungen, Schraubverbindungen oder Scharniere vorgesehen sein. Wie bereits oben erläutert, können auch die Wände 2 miteinander reversibel verbindbar gestaltet sein.

An den freien Enden der Wände 2, die im Grunde dem Boden 11 gegenüberliegen, ist der umlaufender Rand 10 angeordnet. Der Rand 10 erstreckt sich weg von dem wannenförmigen Raum, das heißt, verläuft im Wesentlichen nach außen, so dass das freie Ende des Randes 10 nach außen ragt. Der Rand 10 kann kragenförmig gestaltet sein, so dass der Rand 10, bzw. eine Fläche des Randes 10 im Wesentlichen parallel zur Grundfläche 7 der Wände 2 verläuft, sich aber weg von ihr orientiert. Der Rand 10 kann beispielsweise durch dem Fachmann bekannte Umformungsprozesse gebildet sein und einteilig mit der jeweiligen Wand 2 vorliegen. Es kann jedoch auch vorgesehen sein, dass der Rand 10 als mehrere separate Bauteile vorliegt, die reversibel an einer jeweiligen Wand 2 anbringbar sind. Hierfür können reversible oder irreversible Verbindungen genutzt werden. Beispielsweise kann der jeweilige Rand 10 an einer Längsseite 5, 6 einer Wand 2 angeschweißt oder festgeschraubt werden. Auch kann ein Rand 10 und eine Wand 2 über ein Stecksystem miteinander verbindbar sein, indem beispielsweise das freie Ende der Wand 2 oder des Randes 10 eine schienenförmige Öffnung umfasst, in die das jeweilige Ende des Verbindungspartners, also des Randes 10 oder der Wand 2 hier hineingesteckt und bei Bedarf mit Befestigungsmitteln fixiert wird.

Der Rand 10 kann auch in einem Winkel α zur Grundfläche 7 der Wand 2 verlaufen. In einer weiteren Gestaltung kann der Rand 10 kragenförmig gestaltet sein, d. h. läuft im Wesentlichen senkrecht weg von Wand 2. Des Weiteren kann vorgesehen sein, dass sich an den kragenförmigen Bereich ein nach unten erstreckender kantenförmiger Bereich anschließt, der insbesondere eine Abschlusskante bildet. In einer Ausgestaltung kann der Rand 10 als umlaufender Überhang ausgestaltet sein.

Der kantenförmige Bereich formt im Grunde mit dem kragenförmigen Bereich und der Grundfläche 7 einer Wand 2 ein nach unten offenes Schienenprofil. Je nach Ausgestaltung kann der kantenförmige Bereich in verschiedenen Winkeln zu dem kragenförmigen Bereich stehen. In der Figur 3 steht der kantenförmige Bereich im Wesentlichen senkrecht zum kragenförmigen Bereich oder im Wesentlichen parallel zu der Grundfläche 7.

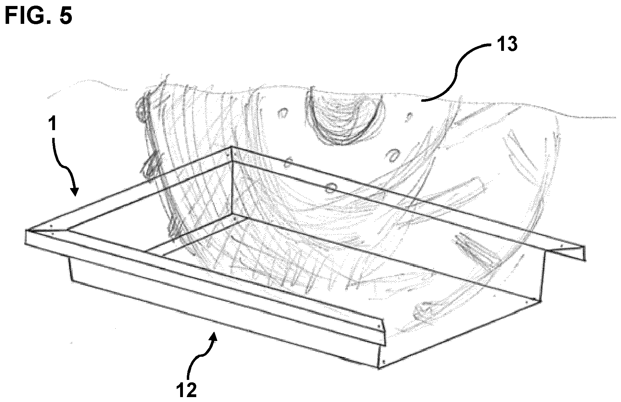

Figur 5 zeigt eine Ansicht einer offenen Box 12 mit einem aufgenommenen Fahrzeugreifen 13. Um ein Fahrzeug, bzw. dessen Reifen 13 in die wannenförmige Box 12 zu befördern, kann zumindest eine Wand 2 der Box 12 entfernt und jeweils eine Box 12 vor oder hinter jeweils einem Reifen 13 platziert werden. Das Fahrzeug kann anschließend derart bewegt werden, dass jeder Reifen 13 in einer wannenförmigen Box 12 platziert ist. Um die Platzierung der Reifen 13 zu vereinfachen können zwei, nämlich die gegenüberliegenden Wände 2 an den Schmalseiten der Box 12 entfernt werden, so dass eine Gasse gebildet wird. Nach Platzierung der Reifen 13 in den Boxen 12 können die zuvor entfernten Wände 2 wieder an dem Boden 11 befestigt werden, so dass die Boxen 12 wieder geschlossen sind.

Wie bereits geschildert, gelangen Schadnager, z. B. Mäuse oder Ratten über die Reifen 13 in das Fahrzeug. Durch die Platzierung der Reifen 13 in der Box 12 können Schadnager jedoch nicht mehr den Reifen 13 erreichen. Denn aufgrund der Gestaltung der Vorrichtung 1 mit ihren Wänden 2 und des umlaufenden Randes 10 gelangen Schadnager nicht mehr an den Reifen 13 und können nicht über den Reifen in z. B. das Fahrzeug klettern. Eine Beschädigung des Fahrzeuges während einer Einlagerung wird verhindert.

## Patentansprüche

1. Vorrichtung (1) zur Abwehr von Schadnagern mit mehreren plattenförmigen Wänden (2), die jeweils eine im Wesentlichen rechteckige Grundfläche (7) mit zwei Schmalseiten (3, 4) und zwei Längsseiten (5, 6) aufweisen und mit Verbindungsmitteln (8) zur Verbindung der Wände (2) miteinander, wobei die Wände (2) mit jeweils einer ihrer Längsseiten (5, 6) auf einem Boden aufstellbar sind und wobei jede Wand (2) an einer Längsseite (5, 6) einen Rand (10) aufweist, der in einem Winkel α oder einem Bogen von der Grundfläche (7) absteht.

2. Vorrichtung (1) nach Anspruch 1, **dadurch gekennzeichnet, dass** die Wände (1) aus Metall, Kunststoff, faserverstärktem Kunststoff oder einer Kombination hieraus gefertigt sind.

3. Vorrichtung (1) nach einem der vorhergehenden Ansprüche, **dadurch gekennzeichnet, dass** der Boden (11) durch ein Platte gebildet ist, an der die Wände (2) entweder reversibel befestigbar oder fest installiert sind, so dass ein wannenförmiger und nach oben offener zur Aufnahme eines Fahrzeugreifens (13) ausgebildeter Raum gebildet ist.

4. Vorrichtung (1) nach einem der vorhergehenden Ansprüche, **dadurch gekennzeichnet, dass** jeweils eine Wand (2) mit ihrem zugehörigen Rand (10) einteilig gestaltet ist.

5. Vorrichtung (1) nach einem der vorhergehenden Ansprüche, **dadurch gekennzeichnet, dass** mehrere Wände (2) an ihren Längsseiten (5, 6) miteinander verbindbar sind.

6. Vorrichtung (1) nach einem der vorhergehenden Ansprüche, **dadurch gekennzeichnet, dass** die Verbindungsmittel (8) nahe den oder an den Schmalseiten (3, 4) vorliegen.

7. Vorrichtung (1) nach einem der vorhergehenden Ansprüche, **dadurch gekennzeichnet, dass** der Rand (10) mehrteilig gestaltet und an den Wänden (2), insbesondere deren Längsseiten (5, 6) befestigbar ist.

8. Vorrichtung (1) nach einem der vorhergehenden Ansprüche 1 bis 6, **dadurch gekennzeichnet, dass** jeweils ein Rand (10) an einer Längsseite (5, 6) einer Wand (2) reversibel befestigbar ist.

9. Vorrichtung (1) nach einem der vorhergehenden Ansprüche, **dadurch gekennzeichnet, dass** der Rand (10) als halbkragenförmiger Überhang gestaltet ist, dessen freies Ende in Richtung der gegenüberliegenden Schmalseite (5, 6) oder der Grundfläche (7) weist.

10. Vorrichtung (1) nach einem der Ansprüche 1 bis 8, **dadurch gekennzeichnet, dass** der Rand (7) als ein nach unten offenes Schienenprofil gestaltet ist.

11. Vorrichtung (1) nach einem der vorhergehenden Ansprüche 1 bis 8, **dadurch gekennzeichnet, dass** der Rand (10) zumindest bereichsweise in einem spitzen oder stumpfen Winkel α zur Grundfläche (7) verläuft.

12. Vorrichtung (1) nach einem der vorhergehenden Ansprüche, **dadurch gekennzeichnet, dass** an den Wänden (2) Stützmittel (9) vorliegen oder an diesen reversibel befestigbar sind.

13. Vorrichtung (1) nach Anspruch 12, **dadurch gekennzeichnet, dass** jeweils eine Wand (2) mit ihrem zugehörigen Rand (10) und/oder einem Stützmittel (9) oder mehreren Stützmitteln (9) einteilig gestaltet ist.
